# EUROPEAN PATENT APPLICATION

(11) **EP 4 518 240 A1**
(43) Date of publication of application: **05.03.2025**
(21) Application number: 23796914.2
(22) Date of filing: 21.03.2023
(51) Int. Cl.: H04L 9/06, G01S 19/13

(54) **PSEUDORANDOM SEQUENCE GENERATOR FOR A GLOBAL NAVIGATION SATELLITE SYSTEM SIGNAL RECEIVER**

(30) Priority: 29.04.2022 RU 2022111908
(71) Applicant: Obschestvo S Ogranichennoy Otvetstvennostyu "Bora" (ooo "Bora"), Sankt-Peterburg, 196084 (RU)
(72) Inventor: BOCHKOVSKY, Andrey Leonardovich, 195257 Sankt-Peterburg (RU); NIKOLAENKO, Alexandr Vladimirovich, 196608 Sankt-Peterburg (RU); POSPELOV, Sergey Sergeevich, 191123 Sankt-Peterburg (RU); RAKHMANKULOV, Ildar Iltyzyrovich, 196084 Sankt-Peterburg (RU); CHISTYAKOV, Valery Valentinovich, 195279 Sankt-Peterburg (RU)
(74) Representative: Chimini, Francesco
(86) International application number: PCT/RU2023/050056
(87) International publication number: WO 2023/211314

(57) **Abstract**

The invention relates generally to the radio navigation field and may be applied to design of Global Navigation Satellite System (GNSS) Receivers, and particularly of GNSS GPS (USA), Galileo (EU), Glonass (Russia), Beidou (China), QZSS (Japan), IRNSS (India), and augmentation systems SBAS (different states). In the invention, the function of generating various PRN codes is repositioned from numerous tracking channels of multi-frequency, multi-constellation GNSS receiver to a shared PRN code generator unit, which serves in series all tracking channels. Such centralization of the PRN codes generation function enables a significant complexity reduction when the GNSS receiver includes a great number of tracking channels. A sufficient speed performance of the shared PRN code generator is achieved due to transfer of the PRN code lines from the shared PRN code generator to the receiver tracking channels via a dedicated parallel bus. Speed performance requirements to the dedicated parallel bus of the shared PRN code generator is kept moderate by a special number of symbols choice of PRN code lines thus providing uniformity of tracking channels requests to get new code lines. Use of several alternate means of PRN code lines forming: PRN Code ROM, PRN Code RAM, LFSR-based and one-shot PRN code generators - permits choosing optimal generation means for each type of GNSS signals.

## Description

### Technical field of the invention

The invention relates generally to the radio navigation field and may be applied to design of Global Navigation Satellite System (GNSS) Receivers, and particularly of GNSS GPS (USA), Galileo (EU), Glonass (Russia), Beidou (China), QZSS (Japan), IRNSS (India), and augmentation systems SBAS (different states).

### Background art

A number of global navigation satellite systems has been deployed or are still under deployment: the US owned Global Positioning System (GPS), Russian GNSS Glonass, Europian GNSS Galileo, Chinese GNSS Beidou (or Compass), Japanese regional system QZSS, Indian regional system IRNSS. Systems transmit concurrently both signals for civilian applications, and restricted access signals for authorized users.

Besides that, a number of states deploy or develop functional augmentation systems as a group called Space Based Augmentation System (SBAS).

Further, design peculiarities of GNSS receivers for civil applications and processing of signals with unrestricted access are considered.

Design of each GNSS assumes transmitting navigation signals in several (typically, three) frequency bands. For example, GPS transmits signals in three bands L1, L2 and L5. Galileo satellites transmit signals in frequency bands E1, E6, E5A 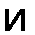 E5B, and only two carrier frequencies coincide with GPS frequencies. Glonass satellites transmit signals in frequency bands L1 and L2, and plan to transmit in the L3 band, and all three carrier frequencies do not coincide with those of GPS or Galileo. Satellites of GNSS Beidou transmit signals in B1, B2 and B3 bands, and the carrier frequencies only partly coincide with GPS frequencies. Glonass satellites, in bands L1, L2, transmit now Frequency Division Multiple Access (FDMA) signals. The rest GNSS - in each of their frequency bands L1, L2 and L5; E1, E6, E5A and E5B; B1, B2 and B3 - transmit signals from all their satellites on same frequencies using so called Code Division Multiple Access (CDMA). There exist plans for Glonass GNSS to transmit CDMA signals as well.

CDMA signals separation bases on use of modulating carrier frequencies by pseudo random noise (PRN) code sequences. Concurrently, PRN codes serve as wide band range measurement codes, which enable one of the main GNSS functions - highly accurate measuring of signal arrival time to the navigation receiver. Numerous PRN code variants have found use in GNSS. Table 1 presents types and parameters of PRN codes used in existing civil GNSS signals of four main GNSS.

**Table 1. Types and Parameters of PRN Codes used in GNSS**

| GNSS | Signals | PRN Code Type | Code Length | Chip Rate, MHz | Overlay (Secondary) Code |
|---|---|---|---|---|---|
| GPS | L1_CA | Gold Codes | 1023 | 1.023 | - |
| | L1C_d | Weil Codes | 10230 | 1.023 | - |
| | L1C_p | | | | + |
| | L2CM | Maximum Length Sequences | 10230 | 0.5115 | - |
| | L2CL | | 767250 | | |
| | L5I, L5Q | Gold Codes | 10230 | 10.23 | + |
| Glonass | G1OF | Maximum Length Sequence | 511 | 0.511 | - |
| | G2OF | | | | - |
| Galileo | E1B | Weil Codes | 4092 | 1.023 | - |
| | E1C | | | | + |
| | E6B | Memory Codes | 5115 | 5.115 | - |
| | E6C | | | | + |
| | E5aI, E5aQ, E5bI, E5bQ | Gold Codes | 10230 | 10.23 | + |
| Beidou | B1I | Gold Codes | 2046 | 2.046 | - |
| | B1C_d | Weil Codes | 10230 | 1.023 | - |
| | B1C_p | | | | + |
| | B2a_d, B2a_p, B2b_p | Gold Codes | 10230 | 10.23 | + |
| | B3I | Gold Codes | 10230 | 10.23 | + |

A great variety of PRN code types is used: Maximum Length Sequences (MLS), Gold codes, Weil codes, and Memory codes. GNSS receivers, typically, generate the three former types of local PRN code replicas with help of schematics based on Linear Feedback Shift Registers (LFSR). The forth type - memory codes - cannot be generated by LFSR, and is typically replicated in GNSS receivers by extracting its fragments from memory devices. To improve mutual correlation properties (over long time intervals) of CDMA PRN codes, additional (overlay) modulation by secondary codes is used. PRN codes even of the same type, for example, Gold codes, or MLS are used with further modifications. For example, different options of short cycled codes are used.

A common peculiarity of almost all PRN codes used in GNSS (except Glonass) should be mentioned. Lengths of all PRN codes (number of chips in sequences) are multiples of 1023. Let us call this value "PRN code base length".

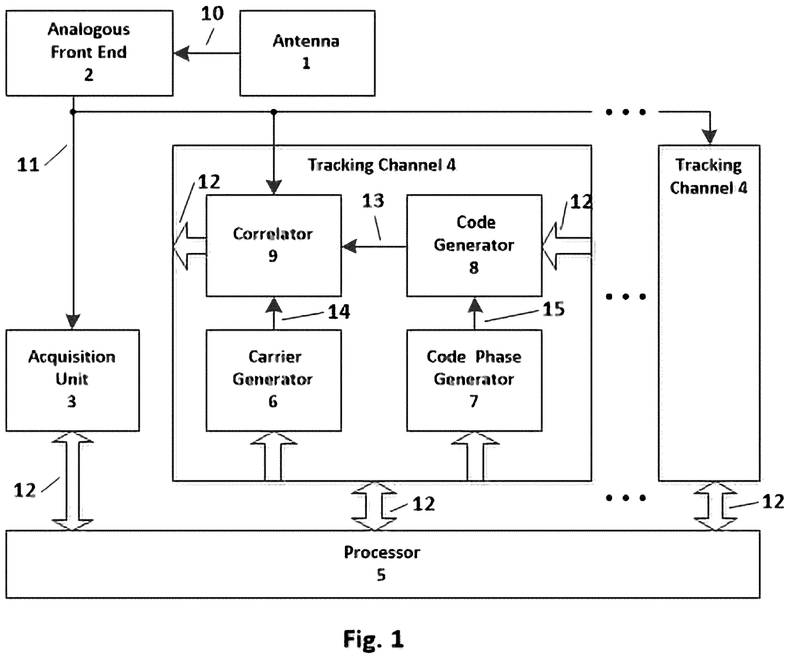

Design of typical mass market GNSS receivers may be described using the block-diagram presented in Fig.1. Antenna (1) and Analogous Front End (AFE) (2) capture, amplify, select (by bandpass filtering) signals, and convert the frequency of signal plus noise mixture (external, antenna, and AFE) to a convenient intermediate frequency (IF). Output signal of AFE (2) is a digitized mixture of signals and noise on IF (11). The Acquisition Unit (3) performs initial search of signals across delay and frequency uncertainty area. The Acquisition Unit (3) operates under control of the Processor (5). Components of signals acquired by the Acquisition Unit (3) are further processed in Tracking Channels (4). A typical Tracking Channel (4) includes generators of local signal replica: Carrier Generator (6), Code Phase Generator (7), Code Generator (8); and the Correlator (9). The latter performs correlation of local signal replicas (13) with input signal samples (11). The Code Phase Generator (7) produces the output signal (15), which controls generation of primary and secondary codes, and subcarrier sequence in the code generator (8). The Processor (5) performs software control over Tracking Channels (4).

The number of Tracking Channels (4) in modern multi-frequency multi-constellation GNSS receivers may reach several hundreds. From Table 1, which lists civil signals of main GNSS, it is seen that 24 civil signal components are transmitted. Typically, GNSS receivers concurrently process 8... 12 line-of-sight signals of each GNSS. In a multi-frequency multi-constellation GNSS receiver, this results in the number of required Tracking Channels (4) from 192 to 288. Furthermore, an additional number of Tracking Channels (4) is necessary to process signals of regional and augmentation systems (QZSS, IRNSS, SBAS). Modern requirements of GNSS signal processing sophistication suppose use of detection and suppression of unwanted effects like multipath signal propagation, and malicious GNSS signals substitute (spoofing). Such algorithms need an increased number of the Correlator (9) arms. At times, to implement a multi-arm correlation processing of a single signal component, two and more Tracking Channels (4) may be occupied concurrently. There exist designs with additional number of Tracking Channels (4) for processing a signal component used in turn or selectively for monitoring purposes depending on current reception conditions. In this way, for modern multi-frequency multi-constellation GNSS receivers, a number of Tracking Channels (4) 200...300 and more seems to be absolutely adequate.

A popular option of GNSS receiver architecture bases on use in all Tracking Channels (4) of the same type universal design, which allows reception of any GNSS signal by each Tracking Channel (4). In this case, Code Generator (8) shall be universal, tuned to generate any required GNSS signal component. Technical solutions are known, which enable implementation of universal PRN code generators in real time sequentially, chip by chip.

The US patent No. 10,735,123 describes PRN Code Generator architecture intended for signal processing of several or all GNSS constellations: GPS, Glonass, Beidou, Galileo. It generates separately PRN codes based on three main code types: Gold codes, Weil codes, and memory codes. Required at the moment code option is selected by logic multiplexing under software control.

The US patent No. 10,996,341 describes PRN Code Generator architecture intended for signal processing of GNSS constellations: GPS, Glonass, Beidou, Galileo. Variants of connecting - under software control - of a common block of LFSR elements with bits number that covers needs to generate PRN codes of different GNSS are presented. It is stated that schematics in a common block are more economic than in several separate PRN code generators.

Taking into account quantity and diversity of PRN codes used in GNSS (Table 1), a great number of Tracking Channels (4) in modern multi-frequency multi-constellation GNSS receivers, it becomes clear that contribution of PRN code generators complexity to the overall receiver complexity turns to be very significant and this is a serious disadvantage of known technical solutions.

### Statement of the invention

An object of the present invention is a reduced complexity of a Global Navigation Satellite System (GNSS) receiver.

The technical result of the present invention consists in a multi-channel GNSS receiver overall complexity reduction by use of a shared universal PRN code generator, which produces PRN code lines (chip blocks), in turn, according to requests from a multitude of receiver tracking channels, and does it by most economic means appropriate for various PRN code types.

The technical result of the present invention is achieved by connecting all tracking channels with a shared PRN code generator via a dedicated parallel data bus, through which tracking channels get PRN code lines, while tracking channels of the receiver timely perform chips serializing of got PRN code lines. In more details, the technical result of the present invention is achieved due to use of a shared universal PRN code generator of a Global Navigation Satellite System receiver, which includes a dedicated parallel data bus, and connected to tracking channels via a dedicated parallel data bus: a read only memory with an input connected to the parallel data bus output; a random access memory with its output and first input connected to the parallel data bus output; one, at least, PRN code lines generator with its first input connected to the parallel data bus output; a PRN code line switch with its output connected to the parallel data bus input, and its inputs connected to the outputs of read only memory and outputs of, at least, one PRN code lines generator; and a sequencer with its output connected with the parallel data bus input; while a random access memory second inputs, and one, at least, PRN code lines generator second inputs are connected to the parallel processor bus of the global navigation satellite systems receiver, and tracking channels of the global navigation satellite systems receiver include PRN code serializers for timely PRN code line chips serialization.

In one embodiment of the present invention, units for timely PRN code line chips serialization comprise a primary code shift register, a primary code buffer register, a secondary code shift register, a secondary code buffer register, and a primary and secondary code address generator.

In one embodiment of the present invention, the read only memory (ROM), the random access memory (RAM), the PRN code lines generator, and the dedicated parallel PRN code data bus are designed with the output data bits number equal to one of the dividers 11, 31, 33, or 93 of the PRN code base length of 1023 chips.

In one embodiment of the present invention, the PRN code lines generator consists of identic sections comprising sequential PRN code generators with their outputs connected to shift registers having parallel outputs connected to the dedicated parallel data bus of the shared PRN code generator.

In one embodiment of the present invention, the PRN code lines generator comprises a single step generator of maximum length sequence lines consisting of a number of register sections corresponding to the number of concurrently generated different PRN code sequences; every section including: a start phase register of the PRN code, and a final phase register of the PRN code, having their second inputs connected to the processor data bus of the receiver; a line base register with its first input connected to the PRN code start phase register and its second input connected to the PRN code final phase register via a comparator; while the PRN code line base register is connected to a line extension unit via a sections output multiplexor, and while the line extension unit output is connected to the dedicated parallel data bus of the shared PRN code generator, with the second PRN code line base register input via a line base generator, and with the second comparator input; while the line base register and comparator number of bits is equal to the power of the maximum length sequence generating polynomial.

In one embodiment of the present invention, the PRN code line generator is implemented as a Gold code lines generator consisting of a number of register sections corresponding to the number of concurrently generated different PRN code sequences; every section including: a counter modulo lines number of the PRN code, a Gold code Start Phase Register connected to the input of a line base register; zero-state output of the counter modulo lines number is connected to the initial phase setting input of the Gold code line base register; the Gold code Start Phase Register inputs and the counter modulo lines number inputs are connected to the processor data bus of the GNSS receiver; while the PRN code line base register is connected to the second input of the line base register via a sections' output multiplexor, a line extension unit and a line base generator; the line extension unit outputs are connected to the PRN Code Line Switch, the second inputs of the latter are connected with the PRN code line generator, and the output is connected to the dedicated parallel data bus of the shared PRN code generator; while the line base register number of bits is equal to the power of the Gold code generating polynomial.

In one embodiment of the present invention, at least one of the PRN code line generator register sections contains additionally a PRN code reproduction address generator with its first input connected to the counter modulo lines number output, the second input connected to the processor data bus of the GNSS receiver, and the output connected to the address inputs of the PRN code RAM.

### Brief description of the drawings

Details, features and advantages of the present invention follow from the below description of the embodiments using drawings, which present:
Fig.1 presents a generalized block diagram of a typical GNSS receiver characterizing the prior art.
Fig.2 presents a GNSS receiver shared PRN code generator block diagram and its connection to tracking channels according to the present invention.
Fig.3 presents a generalized block diagram of a linear feedback shift register PRN Code Line Generator according to the present invention.
Fig.4 presents a GNSS receiver one-step L2C signal PRN Code Line Generator according to the present invention.
Fig.5 presents a GNSS receiver one-step L5 signal PRN Code Line Generator according to the present invention.
Fig.6 illustrates general principle of line extension and line base generation logic for one-step PRN code line generators by the example of Gold code G1 component of the GPS L1 C/A signal.

In the drawings, the following positions are designated as numbers:
*1 - Antenna; 2* - *Analogous Front End; 3 - Acquisition Unit; 4 - Tracking Channel; 5* - *Processor; 6 - Carrier Generator; 7* - *Code Phase Generator; 8* - *Code Generator; 9 - Correlator; 10* - *Antenna output signal; 11 - Digitized signal samples on intermediate frequency; 12 - Processor data bus; 13 - Tracking Channel Code Generator output; 14 - Carrier Generator output; 15 - Code Phase Generator output; 16 - Primary Code Shift Register; 17 - Primary Code Buffer Register; 18 - Secondary Code Shift Register; 19 - Secondary Code Buffer Register; 20 - Primary and Secondary Code Address Generator; 21 - Modulo Two Adder; 22 - Shared PRN Code Generator Bus; 23 - Shared PRN Code Generator; 24 - PRN Code ROM; 25* - *PRN Code RAM; 26* - *PRN Code Line Generators; 27 - Sequencer; 28* - *Code Serializer; 29 - PRN Code Line Switch; 31 - Selector part of the Shared PRN Code Generator Bus; 32 - Address part of the Shared PRN Code Generator Bus; 33 - Data part of the Shared PRN Code Generator Bus; 34 - Line Extension Unit output; 35* - *L2C Generator Registers Section; 36* - *Start Phase Register; 37 - Final Phase Register; 38* - *Comparator; 39* - *PRN Code line current number; 40 - Line Base Register; 41 - Sections Output Multiplexor; 42 - Line Extension Unit; 43 - Line Base Generator; 44 - Line Base Registers Output; 45 - Line Base Generator Output; 46* - *Code line least significant bits; 48 - XB Line Base Register; 49 - Counter Modulo Lines Number; 50 - XB Start Phase Register; 54 - XB Line Base Generator; 55 - XB Sections Output Multiplexor; 56* - *XB Line Extension Unit; 61 -XB Start Phase Register Output; 62 - XB Line Base Register Output; 64 - XB Line Base Generator Output; 66 - XB Line Extension Unit Output; 67 - L5 PRN Code Line Generator Registers Section; 68* - *PRN Code Line Reproduction Address Generator; 69* - *PRN Code Line Reproduction Address; 70 - PRN Code Line Generator Section; 71* - *Serial Type PRN Code Generator; 72* - *Code Line Register; 73 - Serial PRN Code symbols.*

### Detailed description

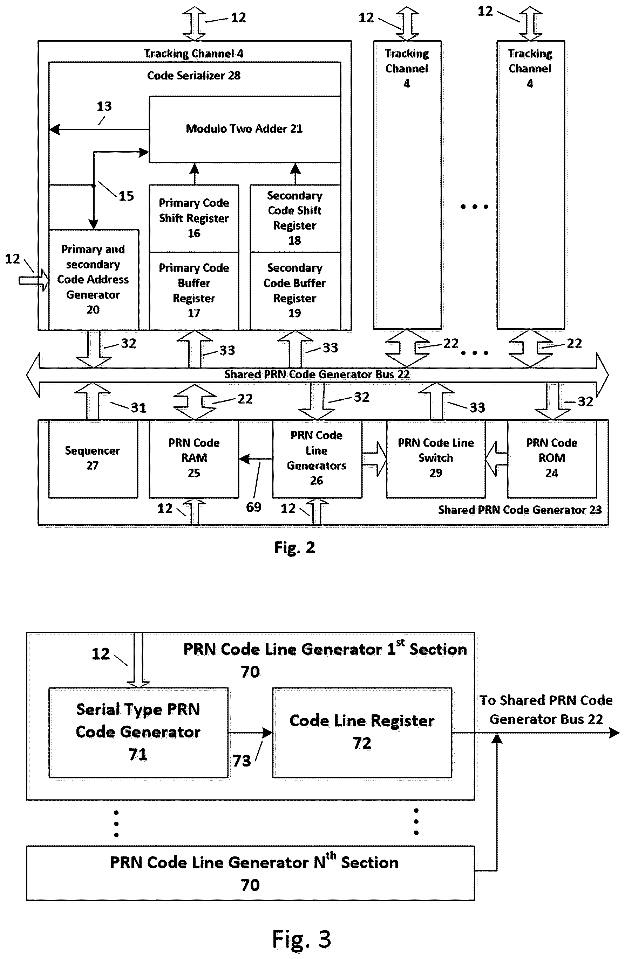

Fig.2 is a block diagram of a shared PRN code generator for a GNSS receiver and its connection to the receiver tracking channels according to the present invention. The Shared PRN Code Generator (23) for a GNSS receiver consists of a PRN Code ROM (24), a PRN Code RAM (25), at least one PRN Code Line Generator (26), a PRN Code Line Switch (29) and a Sequencer (27) connected to a multitude of GNSS receiver Tracking Channels (4) via a dedicated Data Bus (22) of the Shared PRN Code Generator; while the PRN Code Line Switch (29) output (33) is connected to the Shared PRN Code Generator Bus (22), and PRN Code Line Switch (29) inputs are connected to outputs of the PRN Code ROM (24), and of at least one PRN Code Line Generator (26).

The PRN Code ROM (24) input is connected to the Shared PRN Code Generator Bus (22). An output and the first input of the PRN Code RAM (25) are connected to the Shared PRN Code Generator Bus (22). The first input of at least one PRN Code Line Generator (26) is connected to the Shared PRN Code Generator Bus (22). The second inputs of the PRN Code RAM (25) and of at least one PRN Code Line Generator (26) are connected to the Processor Data Bus (12) of the receiver; while GNSS Receiver Tracking Channels (4) contain units dedicated for timely serialization of PRN code line elements (chips). The Sequencer (27) is connected to the Shared PRN Code Generator Bus (22) via its Selector part (31).

The Sequencer (27) outputs the next Tracking Channel (4) selection signals sequentially to the Shared PRN Code Generator Bus (22). The selected GNSS receiver Tracking Channel (4), if it requires following next lines of a primary or a secondary code, that is, if its Buffer Register of a Primary (17) or a Secondary (19) code is empty, sets a Read Acknowledge signal and address of the required PRN code line via its Primary and Secondary Code Address Generator (20) to the Address part of the Shared PRN Code Generator Bus (32). Depending on the address on the Shared PRN Code Generator Bus (32), the PRN Code ROM (24), or the PRN Code Line Generators (26), or the PRN Code RAM (25) via the PRN Code Line Switch (29) set the addressed PRN code line onto the Shared PRN Code Generator Bus (22), and the Tracking Channel (4) of the GNSS receiver gets the PRN code line into its Primary (17) or Secondary (19) Code Buffer Register. Within The code Serializer (28) of the Tracking Channel (4) the Primary Code Shift Register (16) and the Secondary Code Shift Register (18) convert code lines into series of symbols (chips), that is, serially output the Primary (16) and Secondary (18) Shift Register bits to the Modulo Two Adder (21) under control of the Tracking Channel (4) Code Frequency and Phase Generators (7) (see Fig.1). The code phase generator provides subcarrier symbols to the third input of the Modulo Two Adder (21), if the generated GNSS signal contains this component. As the Primary (16) or Secondary (18) Shift Register is empty, a code line from the corresponding Buffer Register (17 or 19) is transferred, and the latter is emptied. Further, the Sequencer (27) continues generating selection signals to Tracking Channels (4), and the described above procedure is cyclically repeated.

The function of actually forming PRN code lines is interchangeably performed by three functionally equivalent but differently designed units: PRN Code ROM (24), PRN Code RAM (25), and PRN Code Line Generators (26). The units PRN Code ROM and PRN Code RAM are just standard digital units storing PRN codes arranged as table codes and outputting code lines to the tracking channels on requests.

The Shared PRN Code Generator must perform cycles of serving all GNSS receiver tracking channels during time intervals shorter than serialization time of PRN code line of the length L in a tracking channel, which processes a signal of the highest PRN code chip rate **F_{PRN}**. The period of serving GNSS receiver tracking channels by a shared PRN code generator is defined by the number **N** of tracking channels, clock rate **R** of the shared PRN code generator bus, and the number of clocks to serve one tracking channel. If tracking channels are served in a single clock, full service cycle is **Tₛ=N/R**. The interval of time **T_{PRN}** when a tracking channel requires a new code line is defined by the PRN code line length L and the highest PRN code chip rate **F_{PRN},** and is equal to **T_{PRN} = L/F_{PRN}**. To serve all GNSS receiver tracking channels by a shared PRN code generator in time, an obvious condition **T_{PRN}>Tₛ** must be true. From that, a lowest PRN line length L limit follows: **L > N* F_{PRN} /R**. The highest PRN code chip rate of all GNSS is **F_{PRN}=** 10.23 MHz. Then, for example, with R=100 MHz and N=100, the lowest PRN line length **L=11,** and with N=300, the lowest PRN line length L=31. If the PRN code length is not a multiple of the PRN line length **L,** then the last PRN code line is shortened, and the condition **T_{PRN}>Tₛ** may turn false. For this reason, a special choice of the PRN code line length **L** is required. The length of all GNSS PRN code sequences (except GNSS Glonass) is always a multiple of 1023. Taking the PRN code line length L from the dividers (11, 31, 33, 93) of the base length 1023 guaranties equal length of all PRN code lines (except GNSS Glonass).

In a preferred embodiment of the invention, the Shared PRN Code Generator (23) for a GNSS receiver utilizes the length **L** of the code lines and the bits number of the Shared PRN Code Generator Bus (22) equal to one of the values 11, 31, 33, or 93, which are dividers of the base length 1023. For Glonass PRN code, the doubled PRN code length 2*511=1022 may be recommended as a basic length. Then, the last code line may be shortened by only one code chip, and this non-uniformity may be compensated by a slight increase of the shared PRN code generator bus clock rate **R.**

In another preferred embodiment of the invention, the Shared PRN Code Generator (23) for a GNSS receiver includes (Fig.3) one or several GNSS signal PRN Code Line Generators (26) consisting of identic sections (70) presenting serial type PRN Code Generators (71) built, for example, as Linear Feedback Shift Registers (LFSR) with the outputs connected to Code Line Registers (72), and parallel outputs of the latter are connected to the Shared PRN Code Generator Bus (22). The Serial Type PRN Code Generators (71) are designed according to recommendations of normative documents (Interface Control Documents) of corresponding GNSS (GPS, Glonass, Beidou, Galileo, etc.), form PRN code chips (73) in series and output them to the PRN Code Line Registers (72), which accumulate PRN code lines of the required length L before outputting the lines to the Shared PRN Code Generator Bus (22).

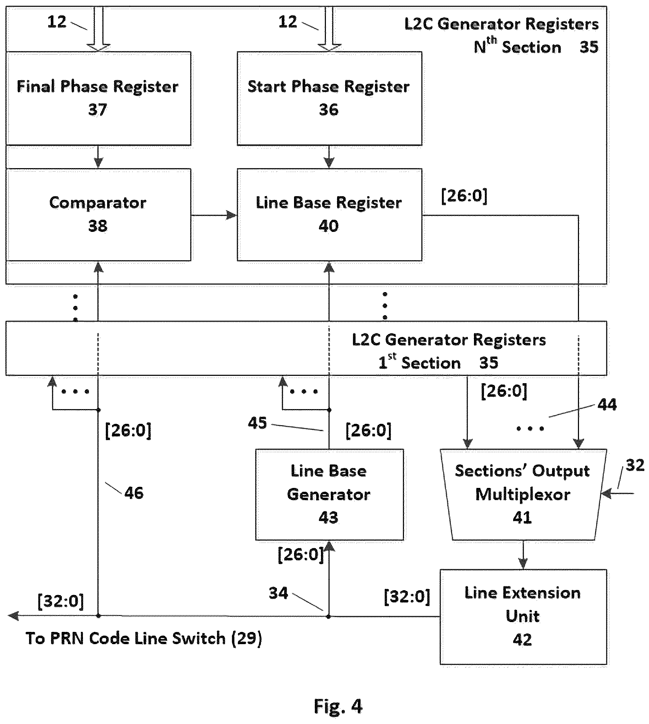

In still another preferred embodiment of the invention, one-step PRN Code Line Generators (26) - illustrated by (Fig.4) for the case of generating GPS L2C PRN code lines of the length 33 - include a number of Registers Sections (35) equal to the number N of generated GNSS signal components (L2CM and L2CL); and a common part composed of a Line Extension Unit (42), which extends a stored in the register section beginning part of the PRN code of the length equal to the generating polynomial power up to the length **L=33** of the PRN code line; and a Line Base Generator (43), which together with the Line Extension Unit (42) converts the stored in the Register Section (35) beginning part of the PRN code to a similar beginning part of the PRN code, but with the code phase greater by the length L of the PRN code line. Every L2C Generator Registers Section (35) includes a Start Phase Register (36), a Final Phase Register (37) with their inputs connected to the Processor Data Bus (12); a Comparator (38) with the first input connected to the Final Phase Register (37) output. The Start Phase Register (36) output is connected to the input of the Line Base Register (40) with its second input connected to the Comparator (38). All Registers (36, 37, and 40) and the Comparator (38) of the L2C Generator Registers Section (35) are 27 bits wide corresponding to the power of the maximum length sequence generating polynomial 1 + X³ + X⁴ +X⁵ + X⁶ + X⁹ + X¹¹ + X¹³ + X¹⁶ + X¹⁹ + X²¹ + X²⁴ + X²⁷ used for L2C PRN code. The Line Base Register (40) outputs of the L2C Generator Registers Section (35) are connected to the Sections Output Multiplexor (41) inputs; third Line Base Register (40) inputs of the L2C Generator Registers Section (35) are connected to the Line Base Generator (43) outputs; and the Comparator (38) inputs of the L2C Generator Registers Section (35) are connected to the Line Extension Unit (42) outputs, which present, in turn, the output of the PRN Code Line Generators (26) connected to the Shared PRN Code Generator Bus (22) via the PRN Code Line Switch (29).

The PRN Code Line Generators (26) start operating after downloading from the processor of the first and the last PRN code segments into the Start Phase Register (36) and the Final Phase Register (37) correspondingly. The content of the Start Phase Register (36) is transferred to the Line Base Register (40). When an address generated by a Tracking Channel (4), which corresponds to the L2C Generator Registers Section (35) of the L2C PRN Code Line Generator (26), appears on the Shared PRN Code Generator Bus (22) of the Generator (23), the Sections Output Multiplexor (41) connects the Section to the Line Extension Unit (42) inputs. Simultaneously, write inputs of the Line Base Register (40) from the Line Base Generator (43) output (45) and from the Line Extension Unit (42) via the Comparator (38) are activated. The Line Extension Unit (42) transforms the 27 LSB of the PRN line (36) into a 27-bit base of the next PRN Line Base Generator Output (45). If the 27 LSB segment is equal to the Final Phase Register (37) content, then the Comparator (38) sets the value of the Start Phase Register (36) into the Line Base Register (40), and a new PRN code period starts on the next read by the Tracking Cannel (4) from the L2C Generator Registers Section (35). For a reliable Line Base Register (40) setting, the Comparator (38) state may be delayed for a clock.

The PRN Code Line Base Register (40), the Line Extension Unit (42) and the Line Base Generator (40) together with a Sections' Output Multiplexor (41) compose a ring of a linear feedback, which allows forming a PRN code line of the required length L in a single step. For GNSS signals using maximum length sequences, for example, the signal L2C of GPS, a PRN Code Line Generator contains a single circle of such a linear feedback: a Line Base Register, a Sections' Output Multiplexor, a Line Extension Unit and a Line Base Generator. For GNSS signals using Gold code, for example, the signal L5 of GPS, B2 of Beidou, E5 of Galileo, a PRN Code Line Generator may contain two circles of such a linear feedback: a Line Base Register (40), a Sections' Output Multiplexor (41), a Line Extension Unit (42) and a Line Base Generator (43) - one for the XA Gold code component, and the second for the XB Gold code component. Component lines shall be XOR'ed bitwise.

PRN Code Line Generators (26) of both options - the first option built basing on serial LFSRs (Fig.3), and the second option built on parallel one-shot logic (Fig.4) - output code lines to the tracking channels on requests, form next PRN code lines and then are waiting for a following request.

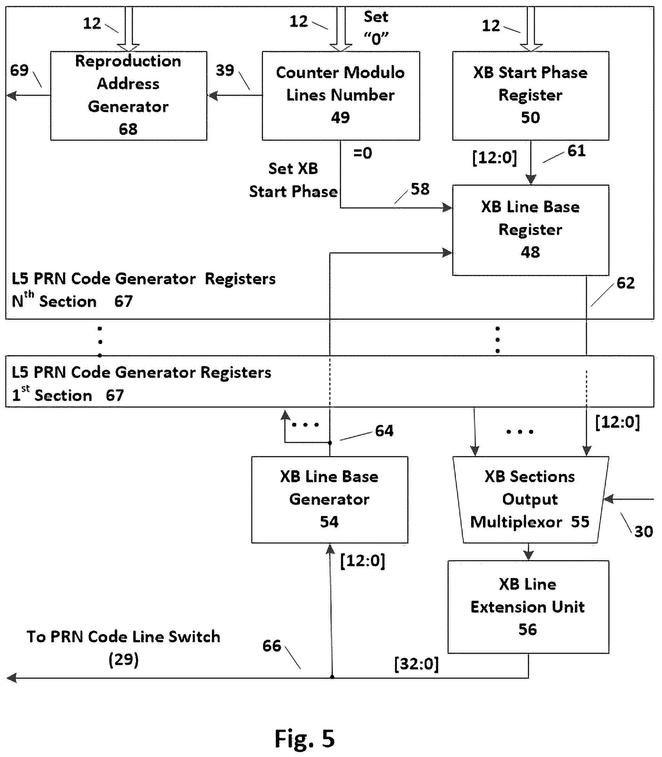

In still another preferred embodiment of the invention - illustrated by (Fig.5) for the case of generating GPS L5 PRN code lines of the length 33 - a one-step PRN Code Line Generators include only one circle of a linear feedback. The PRN Code Line Generator (26) includes N L5 PRN Code Line Generator Registers Sections (67) and a common part consisting of serially connected an XB Sections Output Multiplexor (55), an XB line extension unit (56), and an XB Line Base Generator (54); while the XB line Extension Unit (56) output (66) is connected to the PRN Code Line Switch (29). The L5 PRN Code Line Generator Registers Section (67) includes a Counter Modulo Lines Number (49), and an XB Start Phase Register (50) of the Gold code connected to the XB Line Base Register (48). The zero state output of the Counter Modulo Lines Number (49) is connected to the start code phase setting input of the XB Line Base Register (48); second inputs of the XB Start Phase Register (50) and of the Counter Modulo Lines Number (49) are connected to the Processor data bus (12); the XB Line Base Register (48) output (62) is connected to the XB Line Base Register (48) second input (64) via the XB Sections Output Multiplexor (55), the XB Line Extension Unit (56) and the XB Line Base Generator (54). The XB Line Extension Unit (56) output (66) is the one-step PRN Code Line Generators (26) output, which is connected to the PRN Code Line Switch (29, Fig.2), while the bits number of the XB Line Base Register (48) equals thirteen - the power of the L5 Gold code generating polynomial.

The PRN Code Line Generators (26) of the GPS L5 codes start operating after downloading from the Processor of the first PRN code segment into the Start Phase Register (50) and resetting the Counter Modulo Lines Number (49). The zero-state of the Counter Modulo Lines Number (49) initiates a transfer from the Start Phase Register (50) to the XB Line Base Register (48). When an address generated by a Tracking Channel (4), which corresponds to the L5 Generator Registers Section (67) of the L2C PRN Code Line Generator (26), appears on the Shared PRN Code Generator Bus (22) of the Generator (23), the Sections Output Multiplexor (55) connects the Section (67) outputs (62) to the XB Line Extension Unit (56) inputs. Simultaneously, write inputs of the Line Base Register (48) from the Line Base Generator (54) output (64) are activated. The XB Line Extension Unit (56) transforms the 13 bits of the XB Line Base Register (48) output (62) into 33 bits of the PRN code Line (66). The XB Line Base Generator (54) transforms 13 LSB from the XB Line Extension Unit Output (56) into 13 bits (base) of the next XB Line Base Generator Output (64). The address on the Shared PRN Code Generator Bus (32) provided by the Tracking Channel (4) and corresponding to the L5 PRN Code Line Generator Registers Section (67) simultaneously contains in its alternate bits part an address corresponding to storage of the L5 XA Gold code segment in the PRN Code ROM (24). In response, the PRN Code ROM (24) transfers the line of the XA PRN code component to the PRN Code Line Switch (29, Fig.2) where both code components are XOR'ed finally forming the L5 PRN code line (33). Further on, a concurrent operation of the PRN Code Line Generators (26) and the PRN Code ROM (24) is cyclically repeated forming L5 PRN code lines involving different Code Line Generator Registers Sections (67) responding to requests from Tracking Channels (4). The PRN Code Line Switch (29) is XOR'ing components only for Gold codes; for all others, it transfers either the PRN Code Line Generator (26) output (in case of a maximum length sequence or a Weil code generation), or the PRN Code ROM outputs (24) (in case of table codes).

Use of the three functionally equivalent, but differently designed units: PRN Code ROM, PRN Code RAM, and PRN code line generators, is associated with their advantages and shortcomings. Choosing different options for generating various GNSS signal PRN codes allows expending their strengths and avoiding weaknesses.

PRN Code ROM is characterized by a higher (4 - 5 times) data deployment density on a silicon crystal than PRN Code RAM, but a ROM is one-time programmable during its production. A GNSS receiver, at any instant, normally requires only 8 - 12 PRN codes for processing specific signals of visible satellites of a GNSS, while normative documents specify great numbers of PRN codes: GPS - 60, Galileo - 50, Beidou - 63 for one specific type of a signal component. For long PRN codes like L5, B2, B3, E5, L2CM, L1C, B1C (10230 symbols), the size of a PRN code ROM may reach significant values (about 1.3 Mbyte); and for L2CL - more than 7 MByte. Therefore, using a PRN code ROM is reasonable for storing those Galileo PRN table codes, which cannot be formed by polynomial generators, and comparatively short Glonass PRN codes, or secondary (overlay) codes of all GNSS.

Keeping only 8 - 12 PRN codes for signals of only visible GNSS satellites enables a cheaper implementation with a PRN Code RAM than with a ROM, but a RAM has a disadvantage: it needs a recharge as satellites visibility changes. Such a recharge is possible with help of software, but it is associated with a significant processor load.

GNSS receivers may implement operation modes, which require prescribing the same PRN code to several tracking channels, but with a different code phase. The modes might be, for example: monitoring a wider region around the correlation peak for multipath or spoofing detection/suppression; or a signal reacquisition mode. PRN code ROM and RAM have a common advantage: they can output any of the stored PRN codes to several (any number) receiver tracking channels with arbitrary code phases.

PRN Code Line Generators according to the invention, both of LFSR-based type and one-step code line generators, for long PRN codes, provide cost-effective implementation better than PRN Code ROM and PRN Code RAM when operating with signals of 8 - 12 visible GNSS satellites. A disadvantage of PRN Code Line Generators is a necessity to replicate generator sections according to the number of generated PRN codes, while generating the same PRN code with a different code phase shall be regarded as generation of a separate PRN code.

In still another preferred embodiment of the invention, disadvantages of the two units of the shared GNSS receiver PRN code generator - the PRN code RAM (25) and PRN Code Line Generators (26) - are mutually compensated, if they are used together in a PRN code reproduction mode, when generated by a PRN code line generator (26) code is simultaneously uploaded to the PRN code RAM (25). For this purpose, at least in one of the PRN Code Line Generator Register Sections (67, Fig.5) includes a Reproduction Address Generator unit (68). An address (within the PRN code RAM address space) is preset by software to the Reproduction Address Generator (68), and while code generation is executed, the address (69) is further incremented as the code lines are output to the shared PRN Code Line Generator Bus. The PRN code RAM (25), in the reproduction mode, substitutes an address in its address part of the shared PRN Code Line Generator Bus (22) by the address (69) got from the Reproduction Address Generator (68) of the PRN code generator, and sequentially stores generated PRN code lines. PRN code reproduction is accomplished over the time of generating one full PRN code period. If a short time switching of the PRN code RAM to the reproduction mode is performed only at instants of code lines storing, the PRN code RAM saves its ability to serve the rest receiver tracking channels.

Two PRN code line generator options, the first - sequential, for example, LFSR-based with conversion to multi-bit lines, and the second - one-step with register sections and common logic blocks has been described above. Both have comparable complexity, and the option choice shall base on their additional peculiarities. For example, generator start convenience from a prescribed initial code phase may become such an important peculiarity. A simple procedure of such start may be a preliminary code generator slew from a standard reset code phase throughout a known (software prepared) number of the generator steps without use of generated lines. For the first PRN code line generator option - sequential, for example, LFSR-based one - the number of preliminary slew steps may reach a full PRN code length. In case of generating PRN code for L2CL GPS signal, the number of preliminary slew steps may reach 767250, and, depending on the GNSS receiver architecture, this may unacceptably slow down the signal search process. For the second PRN code line generator option - one-step generator with register sections and common logic blocks - the number of preliminary slew steps may be divisible by the PRN code line length, for example, by 11, 31, 33, or 93.

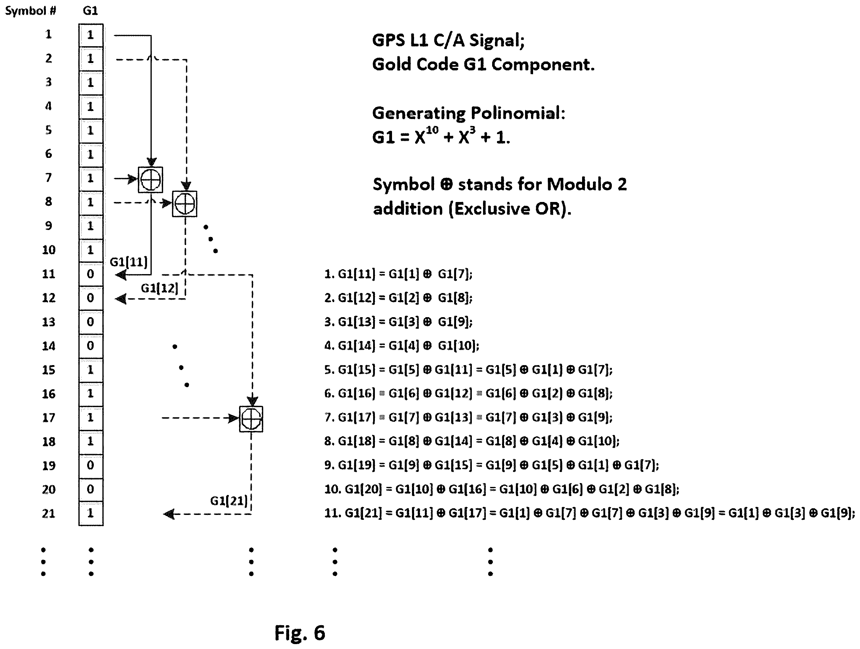

Fig.6 illustrates the principle used to implement logical units of one-step PRN code line generators (Fig.4 and Fig.5): Line Extension Unit (42, 56) and Line Base Generator (43, 54). The illustration bases on an example of generating G1 Gold code component of the L1C/A GPS signal. This code component is chosen only for the illustration purposes as the expressions for its generation are compact. The first PRN code segment 10'b1111111111 is a known constant. Expressions for the following code symbols may be calculated by XOR'ing input variables in accordance with the generating polynomial. Variables numbered greater than ten (the generating polynomial power) are substituted by the former ten throughout expressions derived above in Fig.6; pairs of variables are subject to reduction. The procedure is repeated till getting a required number of symbols equal to the line length L (for Line Extension Unit) or equal to the generating polynomial power (for Line Base Generator). The illustrated procedure is applicable to other PRN codes of GNSS signals using corresponding generating polynomials. Deriving logical functions for Line Extension Units (42, 56) and Line Base Generators (43, 54) according to the illustrated in Fig.6 principle is an affordable engineering task, which does not require further inventive efforts.

Therefore, in the invention, the function of generating various PRN codes is repositioned from numerous tracking channels of a multi-frequency, multi-constellation GNSS receiver to its shared PRN code generator unit, which serves in series all tracking channels. Such centralization of the PRN codes generation function enables a significant complexity reduction when the GNSS receiver includes a great number of tracking channels. A sufficient speed performance of the shared PRN code generator is achieved due to transfer of the PRN code lines from the shared PRN code generator to the receiver tracking channels via a dedicated multi-bit bus. Number of bits in the PRN code lines has been defined, which enable nearly constant intervals between requests from tracking channels to get next required code lines, and thus reduces the required dedicated multi-bit bus clock rate. Use of several alternate means of PRN code lines forming: PRN Code ROM, PRN Code RAM, LFSR-based and one-shot PRN code generators, - allows choosing optimal generation means for each type of various GNSS signal replicas.

The invention may find use, in particular, in radio navigation for designing of Global Navigation Satellite Systems (GNSS) receivers, especially, multi-frequency, multi-constellation GNSS receivers, which contain a great number of tracking channels.

## Claims

1. A shared pseudo-random noise code generator for a global navigation satellite system receiver including units connected to tracking channels of the global navigation satellite system receiver via a dedicated parallel data bus:
a read only memory connected to the dedicated parallel data bus;
a random access memory with its output and its first input connected to the dedicated parallel data bus;
at least one pseudo-random noise code lines generator with its first input connected to the dedicated parallel data bus;
a code line switch unit with its output connected to the dedicated parallel data bus, and its inputs connected to the outputs of the read only memory and outputs of at least one pseudo-random noise code lines generator;
and a sequencer with its output connected to the dedicated parallel data bus;
while second inputs of the random access memory and of at least one pseudo-random noise code lines generator are connected to a data bus of the global navigation satellite system receiver processor, and tracking channels of the global navigation satellite system receiver include code serializers containing units for timely serializing of the pseudo-random noise code symbols.

2. The generator of claim 1 wherein units for timely serializing of the pseudo-random noise code symbols comprise a primary code shift register, a primary code buffer register, a secondary code shift register, a secondary code buffer register, and a primary and secondary code address generator.

3. The generator of claim 1 wherein the read only memory, the random access memory, the pseudo-random noise code lines generator, and the dedicated parallel data bus are built based on a bit width equal to one of the divisors 11, 31, 33, or 93 of the base length of pseudo-random noise codes equal to 1023.

4. The generator of claim 1 wherein the pseudo-random noise code lines generator includes identical sections comprising serial generators of pseudo-random noise sequences with outputs connected to code line registers with parallel outputs connected to the dedicated parallel data bus.

5. The generator of claim 1 wherein the pseudo-random noise code lines generator is implemented as a one-step generator of maximum length sequences consisting of a number of register sections corresponding to the number of different generated sequences, each register section including a code start phase register, a code final phase register, the second inputs of both registers are connected to the processor data bus of the receiver, a code line base register with its first input connected to the code start phase register output, and its second input connected to the code final phase register output via a comparator; while the code line base register is connected to a line extension unit via a sections output multiplexor unit; the line extension unit is connected to the dedicated parallel data bus of the shared pseudo-random noise code lines generator, and connected to the second comparator input and to the second input of the code line base register via a line base generator; while the bit width of the code line base register and the comparator are equal to the generating polynomial power of the maximum length sequence.

6. The generator of claim 1 wherein the pseudo-random noise code lines generator is implemented as a one-step generator of Gold code sequences consisting of a number of register sections corresponding to the number of different generated sequences, each register section including a counter modulo lines number, a Gold code start phase register with an output connected to a code line base register; zero state output of the counter modulo lines number is connected to the initial phase setting input of the code line base register; inputs of the code start phase register and of the counter modulo lines number are connected to the processor data bus of the receiver; while the output of the code line base register is connected to the second input of the code line base register via a sections output multiplexor, a code line extension unit and a code line base generator; and the output of the code line extension unit is connected to the inputs of the code line switch with its second inputs connected to the output of the read only memory and its outputs connected to the dedicated parallel data bus of the shared pseudo-random noise code lines generator; while the bit width of the code line base register and the comparator are equal to the generating polynomial power of the Gold code sequence.

7. The generator of claim 5 or claim 6 wherein at least one register section of the code lines generator additionally includes a reproduction address generator of pseudo-random noise codes with its first input connected to the counter modulo lines number output, its second input connected to the processor data bus of the receiver, and its output connected to the address inputs of the pseudo-random noise code random access memory.
